# EUROPÄISCHE PATENTANMELDUNG

(11) **EP 2 778 463 A1**
(43) Veröffentlichungstag der Anmeldung: **17.09.2014**
(21) Anmeldenummer: 13159155.4
(22) Anmeldetag: 14.03.2013
(51) Int. Cl.: F16F 1/38

(54) **Elastomerlager insbesondere für Kraftfahrzeug und seines Herstellungsverfahren**

(71) Anmelder: ZF Friedrichshafen AG, 88038 Friedrichshafen (DE)
(72) Erfinder: Baltes, Torsten, 49152 Bad Essen (DE); Siemer, Hubert, 49413 Dinklage (DE); Kuemper, Bernd, 32369 Rahden (DE)

(57) **Zusammenfassung**

Die Erfindung betrifft ein Elastomerlager (1), insbesondere für ein Kraftfahrzeug. Das Elastomerlager (1) zeichnet sich durch ein Innenteil (3) aus, welches mit einem Abstand von einem Außenteil (5) umgriffen wird sowie einen zwischen dem Innenteil (3) und dem Außenteil (5) angeordneten, im Wesentlichen säulenförmigen Elastomerkörper (7) mit einer Umfangsfläche (13, 17), welche eine Innenumfangsfläche (13) oder eine Außenumfangsfläche (17) desselben bildet. Darüber hinaus ist zwischen dem Elastomerkörper (7) und dem Innenteil (3) oder zwischen dem Elastomerkörper (7) und dem Außenteil (5) eine Bindemittelschicht (15) angeordnet. Die Umfangsfläche (13, 17) des Elastomerkörpers (7) ist Träger der Bindemittelschicht (15) und bildet eine Fügefläche des Einpressverbundes mit dem Innenteil (3) oder mit dem Außenteil (5). Es wird auch ein entreprechende Verfahren zur Herstellung desElastomerlagers vorgeschlagen.

## Beschreibung

Die Erfindung betrifft ein Elastomerlager, insbesondere für ein Kraftfahrzeug, und ein Verfahren zur Herstellung eines solchen Elastomerlagers gemäß den unabhängigen Ansprüchen.

Elastomerlager mit einem Innenteil, einem dieses beabstandet umgreifenden Außenteil und einem zwischen dem Innenteil und dem Außenteil angeordneten Elastomerkörper, über den das Innenteil mit dem Außenteil verbunden ist, sind aus dem Stand der Technik bekannt.

Die Herstellung des Elastomerkörpers erfolgt üblicherweise durch Spritzgießen. Anschließend erfolgt eine Vernetzung des Elastomers in einem Vulkanisationsprozess. In der Abkühlphase nach der Vulkanisation treten im Elastomer des Elastomerkörpers ungewollte Schrumpfspannungen auf, die die Belastbarkeit des Elastomerlagers herabsetzen.

Die AT 159 246 B schlägt daher vor, durch eine Reduzierung der Wandstärke des Elastomerkörpers Druckspannungen in denselben einzubringen. Die Reduzierung der Wandstärke des Elastomerkörpers erfolgt durch Aufweiten des Innenteils oder durch Verringern des Umfangs des Außenteils. Durch diesen Vorgang, der auch als Kalibrierung bezeichnet wird, erhält der Elastomerkörper eine radiale Vorspannung, die eine Erhöhung der Radialsteifigkeit des Elastomerlagers bewirkt. Die erreichbare Vorspannung ist bei dieser Vorgehensweise durch die maximal mögliche Umformbarkeit von Außenteil und/oder Innenteil begrenzt.

Aus der DE 199 19 573 A1 ist ein Elastomerlager mit einem zunächst nicht vollständig ausvulkanisierten Elastomerkörper bekannt, der im entspannten Zustand in radialer Richtung eine größere Querschnittsfläche aufweist als die Querschnittsfläche zwischen dem Innendurchmesser der Außenhülse und dem Außendurchmesser der Innenhülse des fertig montierten Elastomerlagers. Nach dem Vorbehandeln der mit dem Elastomerkörper zu verbindenden Oberflächen von Innenhülse und Außenhülse mit einem aus einem Primer und einem Cover aufgebauten 2-Komponenten-Haftsystem, erfolgt die Montage, bei der in den Elastomerkörper eine relativ geringe Vorspannung von deutlich unter 15% eingebracht wird. Abschließend erfolgt das vollständige Ausvulkanisieren des Elastomerkörpers im zusammengebauten Zustand des Elastomerlagers.

Aufgabe der Erfindung ist es, ein als Einpressverbund ausgeführtes Elastomerlager mit einer sehr hohen Vorspannung bereitzustellen, zu dessen Montage nur relativ geringe Einpresskräfte erforderlich sind. Gleichzeitig soll ein Verfahren zur Herstellung eines solchen Elastomerlagers bereitgestellt werden.

Diese Aufgabe wird gemäß der vorliegenden Erfindung gelöst durch ein gattungsgemäßes Elastomerlager, welches zusätzlich die kennzeichnenden Merkmale des Patentanspruchs 1 aufweist. Patentanspruch 12 gibt ein Verfahren zur Herstellung eines solchen Elastomerlagers an.

Bevorzugte Ausführungsformen und Weiterbildungen sind Gegenstand der Unteransprüche.

Die Erfindung sieht demnach ein Elastomerlager vor, insbesondere für ein Kraftfahrzeug, wobei das Elastomerlager als Einpressverbund ausgeführt ist und ein Innenteil, ein das Innenteil mit einem Abstand umgreifendes Außenteil und einen zwischen dem Innenteil und dem Außenteil angeordneten, im Wesentlichen säulenförmigen Elastomerkörper mit einer Umfangsfläche, welche eine Innenumfangsfläche oder eine Außenumfangsfläche desselben bildet, aufweist. Zwischen dem Elastomerkörper und dem Innenteil oder zwischen dem Elastomerkörper und dem Außenteil ist weiterhin eine Bindemittelschicht angeordnet. Die Erfindung schlägt vor, dass die vorgenannte Umfangsfläche des Elastomerkörpers Träger der Bindemittelschicht ist und eine Fügefläche des Einpressverbundes mit dem Innenteil oder mit dem Außenteil bildet.

Träger der Bindemittelschicht kann also die Innenumfangsfläche oder die Außenumfangsfläche des Elastomerkörpers sein. Durch den Begriff "Einpressverbund" soll verdeutlicht werden, dass der zwischen dem Innenteil und dem Außenteil angeordnete Elastomerkörper in seinem entspannten Ausgangszustand vor der Erzeugung des Einpressverbundes zumindest bereichsweise größer ist als der Zwischenraum zwischen dem Innenteil und dem Außenteil. Unter dem Begriff "Fügefläche" ist in diesem Zusammenhang die Umfangsfläche des Elastomerkörpers mit der darauf aufgetragenen Bindemittelschicht zu verstehen, die sich während der Erzeugung des Einpressverbundes zusammen mit der darauf aufgetragenen Bindemittelschicht relativ zu einer Außenumfangsfläche des Innenteils oder zu einer Innenumfangsfläche des Außenteils bewegt.

Die Fügefläche ist bevorzugt als eine Zylindermantelfläche ausgeführt, um bei der Erzeugung des Einpressverbundes eine symmetrische Einleitung der Einpresskraft zu gewährleisten. Es ist auch vorstellbar, die Fügefläche von der Form einer Zylindermantelfläche abweichend z. B. in Form einer Mantelfläche einer Säule mit ovaler Grundfläche auszuführen. Durch diese geometrische Ausbildung sind richtungsabhängige Radialsteifigkeiten des Elastomerlagers einstellbar. Darüber hinaus sind in Richtung der axialen Längserstreckung der Fügefläche Variationen des Umfangs der Fügefläche möglich. Diese kann in Axialrichtung beispielsweise eine Bombierung, eine halbkugelförmige, in Umfangsrichtung verlaufende Wulst oder einen sonstigen bei Betrachtung in einem Axialschnitt stetig oder unstetig verlaufenden konkaven, konvexen oder wechselnden Verlauf aufweisen.

Bei hohen Belastungen des Elastomerlagers ist eine hohe Vorspannung des Elastomerkörpers erforderlich, um unerwünschte Zugspannungen in dem Elastomer des Elastomerkörpers zu vermeiden und so die Lebensdaueranforderungen erfüllen zu können. Die hohe Vorspannung ist beispielsweise erforderlich, wenn bei einem Elastomerlager eine hohe Radialsteifigkeit bei gleichzeitig geringer Torsionssteifigkeit gefordert ist. Diese Anforderung liegt u. a. bei Stabilisatorlagern, auch Drehstabschulterlager genannt, bei Elastomerlagern für Stabilisatorlenker, auch Koppelstangen genannt, und bei unteren Stoßdämpferlagern vor.

Richtungsabhängige Anforderungen an die Radialsteifigkeit können beispielsweise bei Stabilisatorlagern mit einer in Fahrzeugquerrichtung verlaufenden Lagerachse vorliegen. Häufig ist bei diesem Lagertyp in Richtung der Fahrzeughochachse eine höhere Radialsteifigkeit gefordert als in Fahrtrichtung. Für derartige Anwendungsfälle können in dem Elastomerkörper sogenannte Zwischenbleche eingebettet sein. Zwischenbleche sind häufig als Kreisringsegmente ausgebildet und werden bevorzugt paarweise gegenüberliegend in Richtung der geforderten höheren Radialsteifigkeit und radial zur Lagerachse in den Elastomerkörper eingebettet.

Um eine hohe Vorspannung des Elastomerkörpers im Zuge der Erzeugung des Einpressverbundes realisieren zu können und gleichzeitig nur relativ geringe Einpresskräfte einsetzen zu müssen, ist es wichtig, dass die Reibung im Bereich der Fügefläche während der Erzeugung des Einpressverbundes möglichst gering gehalten wird. Darüber hinaus bewirkt eine geringe Reibung an dieser Stelle, dass über die Fügefläche keine unzulässig hohen Kräfte, insbesondere Zug- oder Scherkräfte, die zu einer Schädigung des Elastomerkörpers führen könnten, in die Umfangsfläche des Elastomerkörpers eingeleitet werden. Es hat sich herausgestellt, dass die Reibungsverhältnisse im Bereich der Fügefläche besonders günstig sind, wenn die Umfangsfläche des Elastomerkörpers Träger der Bindemittelschicht ist. Die Haftung der Bindemittelschicht ist an dem Elastomerkörper vergleichsweise besser als an der relativ glatten Innenumfangsfläche des Außenteils bzw. Außenumfangsfläche des Innenteils. Dadurch bleibt die Verteilung des Bindemittels der Bindemittelschicht auf der Umfangsfläche des Elastomerkörpers auch während der Erzeugung des Einpressverbundes nahezu unverändert. Ein Aufschieben oder Abschaben der Bindemittelschicht von der Umfangsfläche des Elastomerkörpers während der Erzeugung des Einpressverbundes unterbleibt weitestgehend. Durch die auch nach der Erzeugung des Einpressverbundes in nahezu konstanter Schichtdicke vorliegende Bindemittelschicht wird im Bereich der Fügefläche nach Fertigstellung des Einpressverbundes eine über die gesamte Fügefläche gleichmäßig fest haftende Verbindung zwischen der Umfangsfläche des Elastomerkörpers und der Außenumfangsfläche des Innenteils oder der Innenumfangsfläche des Außenteils bewirkt.

Bevorzugt ist die Bindemittelschicht als Haftvermittlerschicht, insbesondere als Haftvermittlerschicht auf 1-Komponenten-Basis, ausgebildet. Der Haftvermittler wird auch als Cover Coat bezeichnet und kann lösemittelhaltig oder auch lösemittelfrei vorliegen. Ein Haftvermittler auf 1-Komponenten-Basis hat gegenüber den häufig in der Praxis eingesetzten Haftsystemen auf 2-Komponenten-Basis den Vorteil einer einfacheren Verarbeitbarkeit.

Vorteilhaft ist der Elastomerkörper mit dessen Innenumfangsfläche mit dem Innenteil oder mit dessen Außenumfangsfläche mit dem Außenteil verbunden und bildet dadurch einen Unterzusammenbau, wobei die Bindemittelschicht von der jeweils freien Umfangsfläche des Elastomerkörpers getragen wird.

Die Ausbildung des Unterzusammenbaus bewirkt eine Reduzierung der Anzahl der zur Erzeugung des Einpressverbundes miteinander zu fügenden Bauteile. Dadurch wird es möglich, die Erzeugung des Einpressverbundes in einem Arbeitsgang zu vollziehen. Die freie Umfangsfläche entspricht der zuvor beschriebenen, aus der Umfangsfläche des Elastomerkörpers mit der darauf aufgetragenen Bindemittelschicht gebildeten Fügefläche und bewegt sich während der Erzeugung des Einpressverbundes relativ zu der Innenumfangsfläche des Außenteils oder zu der Außenumfangsfläche des Innenteils.

In vorteilhafter Weiterbildung ist der Elastomerkörper in dem Unterzusammenbau als Anspritzteil ausgebildet.

Die Ausbildung des Elastomerkörpers als Anspritzteil erfolgt bevorzugt im Spritzgießverfahren und eröffnet zahlreiche Gestaltungsmöglichkeiten für den Unterzusammenbau, insbesondere hinsichtlich der Konturierung der Übergangsfläche zwischen der jeweils anderen von Innenteil oder Außenteil und dem angespritzten Elastomerkörper. Die Übergangsfläche kann in ihrer Längserstreckung als Zylindermantelfläche oder als Mantelfläche einer Säule mit unrunder, beispielsweise ovaler, polygonaler oder eckiger Querschnittsfläche ausgebildet sein. Die Übergangsfläche kann in ihrer Längserstreckung neben dem zuvor erwähnten stetigen, säulenförmigen Verlauf auch unstetig mit oder ohne hinterschnittige Konturbereiche, beispielsweise in Form einer oder mehrerer aneinander grenzender Kegelmantelflächen mit einheitlicher oder unterschiedlicher Verjüngungsrichtung ausgebildet sein. Darüber hinaus ist es auch möglich, dass die Übergangsfläche in einem Axialschnitt in Richtung ihrer Längserstreckung wellenförmig verläuft oder zur Erreichung einer günstigen kardanischen Bewegungsmöglichkeit des Elastomerlagers in etwa mittig eine im Wesentlichen halbkugelförmig ausgebildete, umlaufende Wulst aufweist.

Das Innenteil oder das Außenteil des Unterzusammenbaus ist bevorzugt aus einem metallischen Werkstoff, insbesondere aus Stahl oder Aluminium, gebildet. Als Konstruktionsmaterial für das Außenteil des Unterzusammenbaus ist auch Kunststoff geeignet.

Um ein Elastomerlager mit einer besonders hohen Vorspannung zu erhalten, ist es möglich, einen Unterzusammenbau mit einem Außenteil mit einer in Richtung seiner Längserstreckung nach radial außen gewölbten Außenumfangsfläche, die auch als bombierte Außenumfangsfläche bezeichnet wird, bereitzustellen. Nach der Erzeugung des Einpressverbundes wird das mit dem vorgenannten Unterzusammenbau erstellte Elastomerlager dann in eine Aufnahmeöffnung eines aufnehmenden Bauteils eingedrückt deren Umfang kleiner ist als der größte Umfang der bombierten Außenumfangsfläche.

Eine Weiterbildung der Erfindung sieht vor, dass das jeweils andere von Innenteil oder Außenteil an der zu der Bindemittelschicht weisenden Oberfläche eine Lackschicht aufweist, welche an die Bindemittelschicht angrenzt. Auf diese Weise kann die für das Fügen des Elastomerlagers erforderliche Einpresskraft reduziert werden. Die Lackschicht ist bevorzugt als Nasslack-Schicht ausgebildet. Nasslacke als Epoxidharzlacke haben sich als besonders geeignet erwiesen. Die Nasslacke können als Ein- oder Zwei-Komponenten-Systeme, bei denen dem Nasslack kurz vor der Verarbeitung ein flüssiger Härter beigemengt wird, aufgetragen werden. Der Auftrag erfolgt vorteilhaft im Spritzverfahren. Die Trocknung der Nasslack-Schicht kann bei Raumtemperatur oder durch gezielte Wärmezufuhr, beispielsweise in einem Trocknungsofen, erfolgen. Letzteres wird auch als Einbrennen bezeichnet. Als Untergrund für Nasslack-Schichten sind insbesondere Metall-Oberflächen geeignet, die vor dem Lackauftrag durch Schleifen oder Sandstrahlen vorbereitet wurden. Neben der Applikation im Spritzverfahren ist zur Erreichung einer geschlossenen Nasslack-Schicht insbesondere eine Kathaphoresische Tauchlackierung (KTL) geeignet.

Vorteilhaft ist die Lackschicht als eine Pulverlackschicht, insbesondere eine Pulverlackschicht auf Epoxidharzbasis, ausgebildet. Die Reibung zwischen der aus der Umfangsfläche des Elastomerkörpers mit der darauf aufgetragenen Bindemittelschicht gebildeten Fügefläche und der zu der Bindemittelschicht weisenden Oberfläche des Innenteils oder des Außenteils, und damit die Einpresskraft zur Erzeugung des Einpressverbundes, kann weiter reduziert werden, wenn die zu der Bindemittelschicht weisende Oberfläche des Innenteils oder des Außenteils eine Pulverlackschicht aufweist. Als besonders vorteilhaft hat sich hierbei eine Pulverlackschicht auf Epoxidharzbasis erwiesen. Aufgrund der Lösemittelfreiheit von Pulverlacken sind für diesen reibungsmindernden Effekt keine Nachteile in Bezug auf den Arbeitsschutz und den Umweltschutz in Kauf zu nehmen.

Bevorzugt sind bzw. ist das Innenteil und/oder das Außenteil hülsenförmig ausgebildet.

Die hülsenförmige Ausbildung von Innenteil und/oder Außenteil hat den Vorteil, dass als Ausgangsmaterial für diese Bauteile im einfachsten Fall von einem als Stangenmaterial ausgebildeten Rohr, insbesondere einem Rundrohr aus Stahl oder Aluminium, abgetrennte Rohrabschnitte verwendet werden können. Um bei einer Montage des Elastomerlagers einen Anschlag, insbesondere einen Tiefenanschlag in einer Eindrückrichtung, bereitstellen zu können, kann das hülsenförmig ausgebildete Außenteil auf einer Stirnseite oder auf beiden Stirnseiten mit einem umfangsseitig nach radial außen weisenden Kragen versehen sein.

Darüber hinaus kann die Außenumfangsfläche des Außenteils und die Innenumfangsfläche des Innenteils, wenn dieses nicht massiv ausgeführt ist, von der Gestalt einer Zylindermantelfläche abweichen. Durch eine in Umfangsrichtung unrunde Ausführung, beispielsweise in Form einer Mantelfläche einer Säule mit polygonaler Grundfläche, kann durch das Elastomerlager eine Anschlussfläche bereit gestellt werden, die, bei korrespondierender Ausgestaltung eines Anschlussteils, geeignet ist, durch einen Formschluss ein Drehmoment, beispielsweise von einem Stabilisator über das Innenteil in den Elastomerkörper eines Stabilisatorlagers, zu übertragen.

Das Innenteil kann alternativ massiv als in Richtung der Längserstreckung des Elastomerlagers ausgerichteter Stab, beispielsweise als Rundstab oder als Stab mit quadratischer Querschnittsfläche, ausgebildet sein. Der Stab kann eine in seiner Querschnittsfläche zentrisch oder exzentrisch angeordnete und in seiner Längsrichtung verlaufende Durchgangsöffnung aufweisen. Die Durchgangsöffnung kann rund oder unrund, beispielsweise als Langloch zum Ausgleich von Fertigungs-oder Montagetoleranzen, ausgebildet sein. Es ist ebenfalls möglich, das Innenteil mit mehreren in Richtung seiner Längserstreckung verlaufenden Bohrungen zu versehen, um geometrisch gleiche Elastomerlager für unterschiedliche Montagefälle einsetzen zu können. Das Innenteil kann auch massiv mit stirnseitigen Gewindezapfen, die einseitig oder beidseitig aus dem Elastomerlager hinausreichen, ausgebildet sein.

Zweckmäßig ist das Innenteil aus einem zumindest an seiner Außenumfangsfläche mit Pulverlack beschichteten Rohrabschnitt oder Strangpressprofilabschnitt gebildet.

Die Verwendung eines an seiner Außenumfangsfläche mit Pulverlack beschichteten Rohres oder Strangpressprofils als Ausgangsmaterial für das Innenteil ist besonders wirtschaftlich, da es sich bei den Rohren oder Strangpressprofilen um relativ günstiges Stangenmaterial handelt und der Arbeitsgang "Pulverlackieren der Außenumfangsfläche des Innenteils" mit den zugehörigen Vorbehandlungsschritten entfallen kann. Bei der Verwendung von zumindest an ihrer Außenumfangsfläche mit Pulverlack beschichteten Stahlrohren, die vor dem Aufbringen der Pulverlackschicht verzinkt wurden, ist nach dem Abtrennen der Rohrabschnitte eine Versiegelung der Schnittflächen nicht erforderlich, da diese durch einen sogenannten, durch die Zinkschicht bewirkten, Selbstheilungseffekt geschützt sind.

Vorteilhaft ist das Außenteil aus einem zumindest an seiner Innenumfangsfläche mit Pulverlack beschichteten Rohrabschnitt oder Strangpressprofilabschnitt gebildet.

Zumindest an ihrer Innenumfangsfläche mit Pulverlack beschichtete Außenteile aus Rohren oder Strangpressprofilen herzustellen, ist wirtschaftlich günstig, weil auf das Aufbringen der Pulverlackschicht als separatem Arbeitsgang verzichtet werden kann. Die Rohrabschnitte oder Strangpressprofilabschnitte können unmittelbar in den Prozess zur Erzeugung des Einpressverbundes einfließen. Die innerhalb des Rohrabschnitts oder des Strangpressprofilabschnitts liegende Pulverlackschicht ist weitestgehend vor Beschädigungen während des Transports geschützt, selbst wenn die Rohrabschnitte oder Strangpressprofilabschnitte als Schüttgut behandelt werden. Die Verwendung von Strangpressprofilabschnitten bietet darüber hinaus den Vorteil von vielerlei Gestaltungsmöglichkeiten hinsichtlich der Konturierung der Außenumfangsfläche des Außenteils. So ist es beispielsweise möglich, die Außenumfangsfläche des als Strangpressprofilabschnitt ausgeführten Außenteils derart zu gestalten, dass dort eine in der Längserstreckung des Elastomerlagers verlaufende T-förmige oder Schwalbenschwanz-förmige Nut zur Befestigung des Elastomerlagers an einem Anschlussteil integriert ist.

Eine Weiterbildung der Erfindung sieht vor, dass das Innenteil und/oder das Außenteil als ein von einer Hülsenform abweichendes Strukturbauteil ausgebildet sind bzw. ist.

Unter einem Strukturbauteil ist im Zusammenhang mit der vorliegenden Erfindung insbesondere ein hochbelastbares Bauteil mit einer im Wesentlichen flächigen, jedoch zumindest bereichsweise strukturierten, das heißt dreidimensionalen Form zu verstehen. Im Zusammenhang mit der Ausbildung des Innenteils und/oder des Außenteils als ein von der Hülsenform abweichendes Strukturbauteil ergeben sich drei mögliche Ausgestaltungen.

In einer ersten Ausgestaltung ist das Außenteil als Strukturbauteil ausgebildet. Zur Erzeugung eines Einpressverbundes wird ein aus dem Innenteil und dem Elastomerkörper gebildeter Unterzusammenbau mit einer auf die freie Umfangsfläche des Elastomerkörpers aufgetragenen Bindemittelschicht in das Außenteil eingepresst. Das Strukturbauteil kann in diesem Fall beispielsweise ausgebildet sein als Gussteil, Schmiedeteil, tiefgezogenes Blechteil mit einem Durchzug zur Aufnahme des Unterzusammenbaus, aus mindestens zwei tiefgezogenen Blechteilen gebildeter Zusammenbau in Schalenbauweise oder als Strangpressprofil, das in seiner Querschnittsfläche einem Stabilisatorlenker mit zwei Lageraugen entspricht, und von dem quasi scheibenweise Stabilisatorlenker abgetrennt werden. Insbesondere, wenn der Elastomerkörper in dem Unterzusammenbau als Anspritzteil ausgebildet ist, bietet diese Ausgestaltung den Vorteil, dass das Spritzgießwerkzeug zur Erstellung des Unterzusammenbaus günstiger ausgelegt werden kann, als dies der Fall wäre, wenn neben dem Unterzusammenbau zusätzlich noch das häufig recht voluminöse und sperrige Strukturbauteil mit in das Spritzgießwerkzeug aufgenommen werden müsste. Dadurch wird es möglich, das Spritzgießwerkzeug mit einer größeren Anzahl an sog. Formen, die auch als Kavitäten, Kaliber oder Nester bezeichnet werden, auszulegen und damit den Herstellungsprozess für die Unterzusammenbauten wirtschaftlicher zu gestalten. Strukturbauteile im Sinne dieser Ausgestaltung können beispielsweise Stabilisatorlenker, Dreipunktlenker für Radaufhängungen, Stoßdämpfer-Kolbenstangen mit Aufnahmen für untere Stoßdämpferlager, Drehmomentstützen oder Aggregatlager zur Lagerung von Motoren oder Getrieben sein.

In einer zweiten Ausgestaltung ist das Innenteil als Strukturbauteil ausgebildet. Zur Erzeugung eines Einpressverbundes wird ein aus dem Außenteil und dem Elastomerkörper gebildeter Unterzusammenbau mit einer auf die freie Umfangsfläche des Elastomerkörpers aufgetragenen Bindemittelschicht auf das Innenteil aufgepresst. Alternativ kann das Innenteil auch in den vorgenannten Unterzusammenbau eingepresst werden. In dem vorliegenden Fall kann das Innenteil beispielsweise ein Stabilisator, auch Drehstab genannt, sein. Das Innenteil kann gemäß dieser zweiten Ausgestaltung auch ein Dreieckslenker sein, der zumindest eine Lagerstelle aufweist, die als Zapfen zur Aufnahme des Unterzusammenbaus ausgebildet ist.

Die Alternativen gemäß der ersten und der zweiten Ausgestaltung bieten darüber hinaus den Vorteil, dass gegenüber konstruktiven Lösungen mit herkömmlichen Buchsenlagern mit einem Außenring und einem Innenring, die in rohrförmige Aufnahmen von Trägerbauteilen eingepresst bzw. auf zapfenförmige Aufnahmen von Trägerbauteilen aufgepresst werden, auf den Außenring bzw. auf den Innenring verzichtet werden kann.

In einer dritten Ausgestaltung sind Außenteil und Innenteil als Strukturbauteile ausgebildet. Es kann ausgewählt werden, welches von Innenteil und Außenteil für die Ausbildung des Unterzusammenbaus mit dem Elastomerkörper verwendet werden soll. Beispielsweise kann das in Bezug auf seine Geometrie für das Spritzgießen günstigere von Innenteil und Außenteil herangezogen werden, um mit diesem den Unterzusammenbau mit dem als Anspritzteil ausgebildeten Elastomerkörper zu bilden. Der Einpressverbund wird dann mit dem verbleibenden von Innenteil und Außenteil erzeugt. Beispielsweise kann ein Stabilisatorlenker aus Metall oder Kunststoff in ein Spritzgießwerkzeug eingelegt und dort in einem anschließenden Spritzgießprozess an einer Innenumfangsfläche zumindest eines Lagerauges des Stabilisatorlenkers ein Elastomerkörper angespritzt werden. Die Innenumfangsfläche des Lagerauges kann dabei, insbesondere bei der Verwendung von Kunststoff als Material für den Stabilisatorlenker, konturiert ausgeführt sein. Beispielsweise können dort zur Verankerung des Elastomerkörpers zueinander unter einem Winkel verlaufende Nuten oder erhabene Stege vorgesehen sein. Stabilisatorlenker und Elastomerkörper bilden einen Unterzusammenbau mit einem als Anspritzteil ausgebildeten Elastomerkörper. Die anschließend auf die freie Umfangsfläche des Elastomerkörpers, die in diesem Fall durch die Innenumfangsfläche des Elastomerkörpers gebildet wird, aufgetragene Bindemittelschicht bildet zusammen mit der Innenumfangsfläche des Elastomerkörpers die Fügefläche aus. Der auf diese Weise als Unterzusammenbau hergestellte Stabilisatorlenker stellt ein als Außenteil ausgebildetes Strukturbauteil dar, welches abschließend zur Erzeugung eines Einpressverbundes mit einem Endabschnitt eines Stabilisators verbunden wird.

Bevorzugt weist der eingepresste Elastomerkörper eine Vorspannung von größer 18%, vorzugsweise größer 20% und besonders vorzugsweise größer 25% auf, wobei die Vorspannung definiert ist als Quotient aus der Differenz einer Gummihöhe des Elastomerkörpers im entspannten und im eingepressten Zustand und der Gummihöhe des Elastomerkörpers im entspannten Zustand.

Die Gummihöhe des Elastomerkörpers im eingepressten Zustand nach der Erzeugung des Einpressverbundes ist der kleinste Abstand zwischen dem Innenteil und dem Außenteil an einer beliebigen Stelle des Elastomerkörpers. Die Dicke der Bindemittelschicht kann bei dieser Betrachtung vernachlässigt werden. Die Gummihöhe des Elastomerkörpers im entspannten Zustand entspricht der an gleicher Stelle ermittelten Dicke des Elastomerkörpers vor der Erzeugung des Einpressverbundes, ebenfalls unter Vernachlässigung der Dicke der Bindemittelschicht. In Versuchen konnten als Einpressverbunde ausgebildete Elastomerlager in der zuvor beschriebenen Anordnung mit einer Vorspannung des Elastomerkörpers von bis zu 40% erzeugt werden. Vorspannungswerte von bis zu 30% sind auf diese Weise reproduzierbar und prozesssicher herstellbar.

Weiterhin wird ein Verfahren zur Herstellung eines wie vorstehend erläuterten Elastomerlagers mit folgenden Verfahrensschritten, vorgeschlagen:
- Bereitstellen eines ersten Fügepartners in Form eines Unterzusammenbaus, aufweisend ein Innenteil oder ein Außenteil und einen mit einer Außenumfangsfläche des Innenteils oder mit einer Innenumfangsfläche des Außenteils verbundenen Elastomerkörper, wobei auf der freien Umfangsfläche des Elastomerkörpers eine Bindemittelschicht, insbesondere eine Haftvermittlerschicht, aufgebracht ist.
- Bereitstellen eines zweiten Fügepartners in Form des Innenteils oder des Außenteils, welches nicht Bestandteil des Unterzusammenbaus ist.
- Erzeugen eines aus dem ersten Fügepartner und dem zweiten Fügepartner gebildeten Einpressverbundes, wobei durch eine Reduzierung der Gummihöhe eine Vorspannung in den Elastomerkörper eingebracht wird.

Möglicher weiterer, aber nicht zwingender, Bestandteil des ersten Fügepartners kann zumindest ein Zwischenblech zur Erhöhung der Radialsteifigkeit des Elastomerlagers sein.

Ist die Außenumfangsfläche des Innenteils mit dem Elastomerkörper verbunden, bildet die Außenumfangsfläche des Elastomerkörpers in dem Unterzusammenbau die freie Umfangsfläche des Elastomerkörpers. Ist die Innenumfangsfläche des Außenteils mit dem Elastomerkörper verbunden, bildet die Innenumfangsfläche des Elastomerkörpers in dem Unterzusammenbau die freie Fläche des Elastomerkörpers. Die Bindemittelschicht liegt vor dem Aufbringen auf den Elastomerkörper in der Regel in flüssiger Form vor und wird bevorzugt durch Sprühen aufgetragen. Die sich an das Aufsprühen der Bindemittelschicht anschließende Trocknung derselben kann bei Raumtemperatur oder mit Warmluftunterstützung erfolgen.

Die dem Elastomerkörper nach der Erzeugung des Einpressverbundes zugewandte Oberfläche des aus dem Innenteil oder dem Außenteil gebildeten zweiten Fügepartners wird vor dem Erzeugen des Einpressverbundes entfettet. Zusätzlich kann diese Oberfläche noch durch Beizpassivieren behandelt sein, wenn es sich bei dem zweiten Fügepartner um ein Bauteil aus Aluminium handelt. Handelt es sich bei dem zweiten Fügepartner um ein Bauteil aus Stahl, wird die zuvor beschriebene Oberfläche bevorzugt einer Phosphatierung, insbesondere einer Dünnschicht-Phosphatierung, unterzogen.

Bevorzugt wird der Elastomerkörper zur Erstellung des Unterzusammenbaus im Spritzgießverfahren an die Außenumfangsfläche des Innenteils oder an die Innenumfangsfläche des Außenteils angespritzt.

Der erste, als Unterzusammenbau ausgebildete Fügepartner wird bevorzugt durch einen Spritzgießprozess in einem Spritzgießwerkzeug hergestellt. Das Innenteil oder das Außenteil wird als sog. Einlegeteil in das Spritzgießwerkzeug, insbesondere in eine Form des Spritzgießwerkzeuges, eingelegt. Die Verbindung der Außenumfangsfläche des Innenteils oder der Innenumfangsfläche des Außenteils wird bevorzugt durch den Spritzgießprozess erzeugt. Soll der Unterzusammenbau zumindest ein Zwischenblech enthalten, wird dieses ebenfalls als Einlegeteil in das Spritzgießwerkzeug eingelegt und dann während des anschließenden Spritzgießprozesses von dem Elastomer des Elastomerkörpers umschlossen. Im Anschluss an den Spritzgießprozess erfolgt während einer Haltezeit ein vollständiges Ausvulkanisieren des Elastomerkörpers unter Druck und Temperatur in dem Spritzgießwerkzeug. Dabei wird das Elastomer des Elastomerkörpers vollständig vernetzt.

Eine Weiterbildung der Erfindung sieht vor, dass auf der dem Elastomerkörper zugewandten Oberfläche des zweiten Fügepartners unter Zuführung von Prozesswärme eine Pulverlackschicht erzeugt wird.

Die Erzeugung der Pulverlackschicht erfolgt nach dem Aufbringen des zunächst in Pulverform vorliegenden Pulverlacks zumindest auf die dem Elastomerkörper zugewandte Oberfläche des zweiten Fügepartners und einer anschließenden Erwärmung des den zweiten Fügepartner bildenden Innenteils oder Außenteils auf eine Objekttemperatur von 140°C bis 220 °C, vorzugsweise 160°C bis 180 °C. Diese Temperatur muss während einer Haltezeit von 3 bis 15 Minuten aufrechterhalten werden, um ein Aufschmelzen des zunächst in Pulverform vorliegenden Pulverlacks und eine anschließende Ausbildung der Pulverlackschicht zu ermöglichen.

Bevorzugt wird zumindest der Bereich der Bindemittelschicht nach dem Erzeugen des Einpressverbundes einer Wärmebehandlung durch einen Wärmeeintrag unterzogen.

Durch den Wärmeeintrag bei Temperaturen in einem Intervall von 140°C bis 200°C, vorzugsweise 160°C bis 180°C, in den Bereich der Bindemittelschicht wird diese aktiviert und eine chemische Reaktion zwischen der die Bindemittelschicht tragenden Umfangsfläche des Elastomerkörpers, der Bindemittelschicht selbst und der sich an die Bindemittelschicht anschließenden Außenumfangsfläche des Innenteils oder Innenumfangsfläche des Außenteils bewirkt, die zu einer fest haftenden Verbindung zwischen dem ersten und dem zweiten Fügepartner führt. Der während der Wärmebehandlung ebenfalls auf den Bereich der Bindemittelschicht einwirkende, durch die hohe Vorspannung des Elastomerkörpers hervorgerufene, starke Anpressdruck unterstützt die Ausbildung der fest haftenden Verbindung zusätzlich.

Der Wärmeeintrag kann durch Wärmeleitung, beispielsweise mittels einer Heizplatte, Konvektion, beispielsweise in einem Umluftofen, Wärmestrahlung, beispielsweise mittels eines Infrarot-Strahlers oder durch induktive Erwärmung erfolgen.

Zweckmäßig erfolgt der Wärmeeintrag über den an die Bindemittelschicht angrenzenden zweiten Fügepartner.

Für den Wärmeeintrag über den an die Bindemittelschicht angrenzenden zweiten Fügepartner empfiehlt sich eine induktive Erwärmung desselben, wenn die geometrische Gestalt des zweiten Fügepartners dies zulässt. Durch eine induktive Erwärmung lässt sich der Wärmeeintrag gut beherrschen und im Wesentlichen auf den Bereich der Bindemittelschicht sowie den zweiten Fügepartner selbst begrenzen. Darüber hinaus sind Verfahren geeignet, die auf dem Prinzip der Wärmeleitung und der Wärmestrahlung basieren, um den Wärmeeintrag über den an die Bindemittelschicht angrenzenden zweiten Fügepartner zu realisieren.

Das zuvor beschriebene vollständige Ausvulkanisieren des Elastomerkörpers in dem Spritzgießwerkzeug wirkt sich hier positiv aus und hat gegenüber einem nur teilweisen Ausvulkanisieren nach dem Spritzgießprozess den Vorteil, dass die nach der Erzeugung des Einpressverbundes in das Elastomerlager einzubringende Wärmemenge auf die zur Aktivierung des Bindemittels und zur Herbeiführung einer chemischen Reaktion im Bereich der Bindemittelschicht erforderliche Wärmemenge reduziert werden kann. Dadurch wird eine mögliche Schädigung oder Beeinträchtigung der Bindemittelschicht oder anderer Komponenten des Elastomerlagers durch eine zu lange Wärmeeinwirkung oder einen zu hohen Wärmeeintrag, beispielsweise infolge eines hier nicht erforderlichen Ausvulkanisierens des Elastomerkörpers, vermieden.

Vorteilhaft erfolgt der Wärmeeintrag über eine Erwärmung des zweiten Fügepartners vor dem Erzeugen des Einpressverbundes oder unter Ausnutzung der dem zweiten

Fügepartner während der Erzeugung der Pulverlackschicht zugeführten Prozesswärme.

Idealerweise entspricht dabei die vor dem Erzeugen des Einpressverbundes in dem zweiten Fügepartner gespeicherte Wärmemenge der für die Aktivierung der Bindemittelschicht und für die anschließende chemische Reaktion im Bereich der Bindemittelschicht benötigten Wärmemenge.

Für die Erwärmung des zweiten Fügepartners vor der Erzeugung des Einpressverbundes empfiehlt sich eine induktive Erwärmung, wenn der zweite Fügepartner eine Außenumfangsfläche aufweist, die im Wesentlichen rotationssymmetrisch ausgebildet ist. Die induktive Erwärmung zeichnet sich insbesondere durch kurze Erwärmungszeiten aus. Unabhängig von der geometrischen Ausbildung des zweiten Fügepartners und ebenfalls unabhängig davon, ob die dem Elastomerkörper zugewandte Umfangsfläche des zweiten Fügepartners mit einer Pulverlackschicht versehen ist oder nicht, ist die Erwärmung in einem Heißluftofen möglich. Auch eine längere Verweildauer des als Innenteil oder als Außenteil ausgebildeten zweiten Fügepartners in dem Heißluftofen, beispielsweise infolge von Betriebsstörungen, ist unproblematisch, da der zweite Fügepartner nicht mit Bindemitteln beschichtet ist, die in einem solchen Fall vorab aktiviert werden könnten und dadurch bzw. durch eine zu früh eingeleitete chemische Reaktion innerhalb der Bindemittelschicht das Innenteil oder das Außenteil unbrauchbar machen würden.

Durch Versuche wurde ermittelt, dass die zur Erzeugung des Einpressverbunds erforderliche Einpresskraft einen besonders niedrigen Wert erreicht, wenn der zweite Fügepartner an seiner dem Elastomerkörper zugewandten Umfangsfläche eine Pulverlackschicht, insbesondere eine Pulverlackschicht auf Epoxidharzbasis, aufweist und vor der Erzeugung des Einpressverbundes erwärmt wird. Unter diesen Randbedingungen kann in dem Elastomer eine Vorspannung von bis zu 40% erreicht werden. Eine Erwärmung des zweiten Fügepartners unter Ausnutzung der dem zweiten Fügepartner während der Erzeugung der Pulverlackschicht zugeführten Prozesswärme ist insbesondere in Bezug auf den zur Herstellung des Elastomerlagers erforderlichen Energieeinsatz besonders günstig. Durch die Erzeugung des Einpressverbundes "in einer Hitze" kann ein nochmaliges, separates Erwärmen des zweiten Fügepartners eingespart oder zumindest auf ein geringfügiges Nachwärmen reduziert werden.

Im Folgenden wird die Erfindung anhand lediglich Ausführungsbeispiele darstellender Zeichnungen näher erläutert. Dabei zeigt:
- Fig. 1: einen Radialschnitt einer Ausführungsform eines Elastomerlagers in einem Zusammenbauzustand;
- Fig. 2: einen Radialschnitt des Elastomerlagers in einer alternativen Ausführungsform in einem vormontierten Zustand;
- Fig. 3: einen Radialschnitt des Elastomerlagers in einer weiteren Ausführungsform, ebenfalls in einem vormontierten Zustand und
- Fig. 4: einen Radialschnitt des Elastomerlagers in einer zusätzlichen Ausgestaltung, abermals in einem vormontierten Zustand.

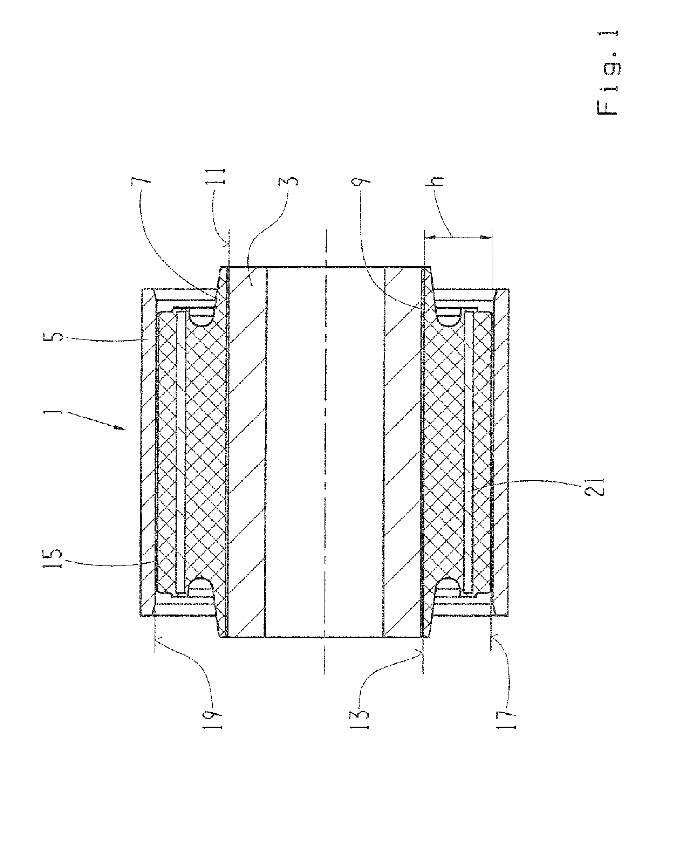

Fig. 1 zeigt ein Elastomerlager 1, welches ein rohrförmiges Innenteil 3, ein das Innenteil 3 konzentrisch umgebendes, ebenfalls rohrförmiges Außenteil 5 und einen den Raum zwischen dem Innenteil 3 und dem Außenteil 5 im Wesentlichen ausfüllenden Elastomerkörper 7 aufweist. Der Elastomerkörper 7 ist mit einer Vorspannung in den Raum zwischen Innenteil 3 und Außenteil 5 eingepresst. Es handelt sich somit um einen Einpressverbund. Zwischen dem Innenteil 3 und dem Elastomerkörper 7 ist ein Haftsystem 9 auf 2-Komponenten-Basis, bestehend aus einem Primer und einem Cover, angeordnet. Das Haftsystem 9 stellt eine durch einen Vulkanisationsprozess erzeugte, fest haftende Verbindung zwischen der Außenumfangsfläche 11 des Innenteils 3 und der Innenumfangsfläche 13 des Elastomerkörpers 7 dar. Zwischen dem Außenteil 5 und dem Elastomerkörper 7 ist eine Bindemittelschicht 15 angeordnet. Diese Bindemittelschicht 15 ist als Haftvermittlerschicht auf 1-Komponenten-Basis ausgebildet. Der Haftvermittler wird auch als Cover Coat bezeichnet und kann lösemittelhaltig oder auch lösemittelfrei vorliegen. Die Bindemittelschicht 15 verbindet die Außenumfangsfläche 17 des Elastomerkörpers 7 mit der Innenumfangsfläche 19 des Außenteils 5. Die Bindemittelschicht 15, die im vorliegenden Ausführungsbeispiel als Haftvermittlerschicht ausgebildet ist, wird von der Außenumfangsfläche 17 des Elastomerkörpers 7 aufgenommen. Die Außenumfangsfläche 17 des Elastomerkörpers 7 ist Träger der Bindemittelschicht 15. Dies ist in der Darstellung gemäß Fig. 1 dadurch verdeutlicht, dass sich die Bindemittelschicht 15 lediglich über den Flächenbereich erstreckt, in dem Außenteil 5 und Elastomerkörper 7 über die Bindemittelschicht in Verbindung stehen. Dieser Flächenbereich stellt eine Fügefläche des Einpressverbundes dar. Die axial äußeren Bereiche der Innenumfangsfläche 19 des Außenteils 5, die nicht über die Bindemittelschicht 15 mit dem Elastomerkörper 7 verbunden sind, sind hierbei nicht mit Bindemittel überzogen. Zur Erhöhung der Radialsteifigkeit des Elastomerlagers 1 ist in den Elastomerkörper 7 ein Zwischenblech 21 angeordnet. Das Zwischenblech 21 ist in dem vorliegenden Ausführungbeispiel einstückig ausgebildet und als das Innenteil 3 koaxial umschließender Ring angeordnet. Das Zwischenblech 21 kann alternativ auch mehrteilig ausgebildet sein. Es kann darüber hinaus mit einer geschlossenen oder von Durchbrüchen durchsetzten Oberfläche ausgeführt sein. Als Material für das Zwischenblech 21 wird bevorzugt Stahl oder Aluminium verwendet. Alternativ ist auch die Verwendung höherfester Kunststoffe vorstellbar. Für die Umsetzung der Erfindung ist die Verwendung eines Zwischenblechs 21 allerdings nicht zwingend erforderlich. Mit h ist die Gummihöhe des Elastomerkörpers 7 im montierten, d. h. eingepressten, Zustand bezeichnet. Die Gummihöhe h im eingepressten Zustand des Elastomerkörpers 7 ergibt sich bei dem rotationssymmetrischen Elastomerlager 1 gemäß Fig. 1 rechnerisch aus der hälftigen Differenz zwischen dem Durchmesser der Außenumfangsfläche 17 und dem Durchmesser der Innenumfangsfläche 13 des Elastomerkörpers 7.

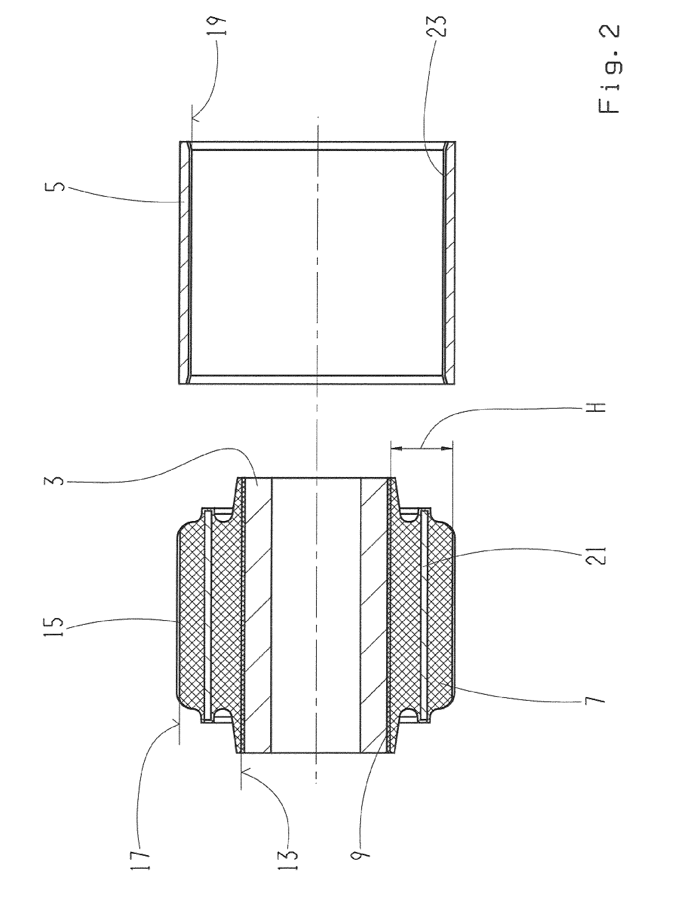

Fig. 2 zeigt das Elastomerlager 1 in einem vormontierten Zustand bestehend aus einem ersten Fügepartner und einem zweiten Fügepartner. Der erste Fügepartner wird dabei durch einem Unterzusammenbau aus dem Innenteil 3, dem Elastomerkörper 7 mit dem darin eingeschlossenen Zwischenblech 21, dem Haftsystem 9 und der auf die Außenumfangsfläche 17 des Elastomerkörpers 7 aufgebrachten Bindemittelschicht 15 gebildet. Die Außenumfangsfläche 17 des Elastomerkörpers 7, die bei der Anordnung gemäß Fig. 2 eine freie Umfangsfläche des Elastomerkörpers 7 darstellt, mit der darauf aufgebrachten Bindemittelschicht 15, bildet die Fügefläche des Einpressverbundes. Der Elastomerkörper 7 ist in dem Unterzusammenbau als Anspritzteil ausgebildet, welches in einem Spritzgießprozess unter Zwischenschaltung des Haftsystems 9 an das Innenteil 3 angespritzt ist. Der zweite Fügepartner wird durch das Außenteil 5 gebildet. Die Innenumfangsfläche 19 des Außenteils 5 ist mit einer Pulverlackschicht 23 überzogen. Die stirnseitigen Enden der Innenumfangsfläche 19 des Außenteils sind jeweils mit einer umlaufenden Fase versehen, um das Einpressen des ersten Fügepartners in den zweiten Fügepartner oder umgekehrt zur Erzeugung des Einpressverbundes zu erleichtern. Ebenfalls gekennzeichnet ist eine Gummihöhe H im entspannten Zustand des Elastomerkörpers 7. Die Gummihöhe H im entspannten Zustand des Elastomerkörpers 7 ergibt sich bei dem rotationssymmetrischen Elastomerlager 1 gemäß Fig. 2 rechnerisch aus der hälftigen Differenz zwischen dem Durchmesser der Außenumfangsfläche 17 und dem Durchmesser der Innenumfangsfläche 13 des Elastomerkörpers 7. Der Durchmesser der Außenumfangsfläche 17 des Elastomerkörpers 7 im entspannten Zustand ist größer als der Innendurchmesser 19 des ebenfalls rotationssymmetrischen Außenteils 5. Dadurch erfährt der Elastomerkörper 7 bei der Erzeugung des Einpressverbundes eine Vorspannung.

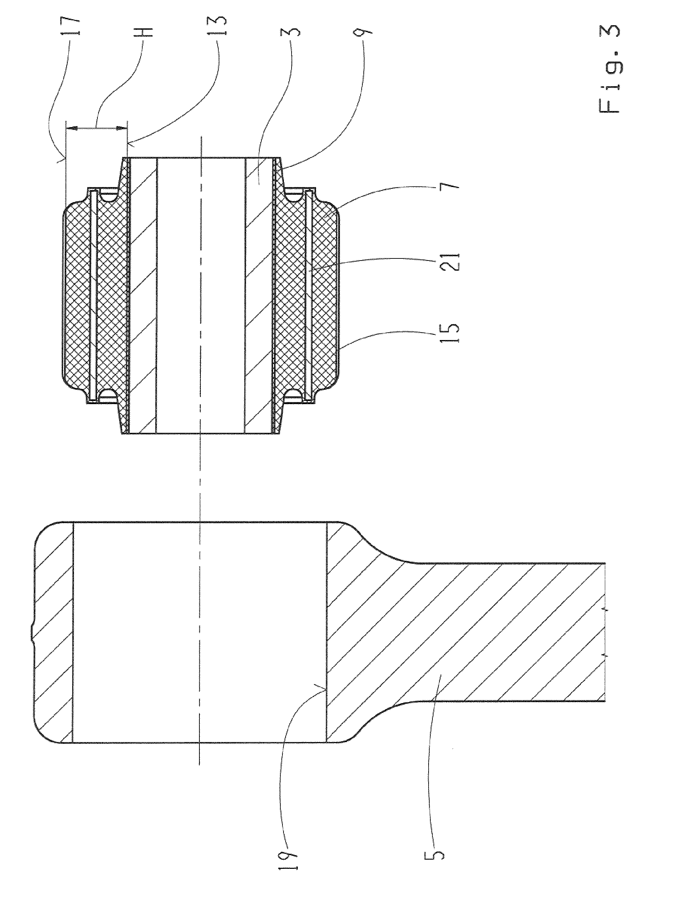

In der Darstellung gemäß Fig. 3 wird das Außenteil 5 durch ein Strukturbauteil, konkret ein Lenkerbauteil, gebildet. Das Lenkerbauteil, welches nicht komplett dargestellt ist, weist ein Lagerauge auf, dessen Wandung die Innenumfangsfläche 19 des Außenteils 5 bildet. Die Bezugszeichen wurden analog zu Fig. 2 vergeben.

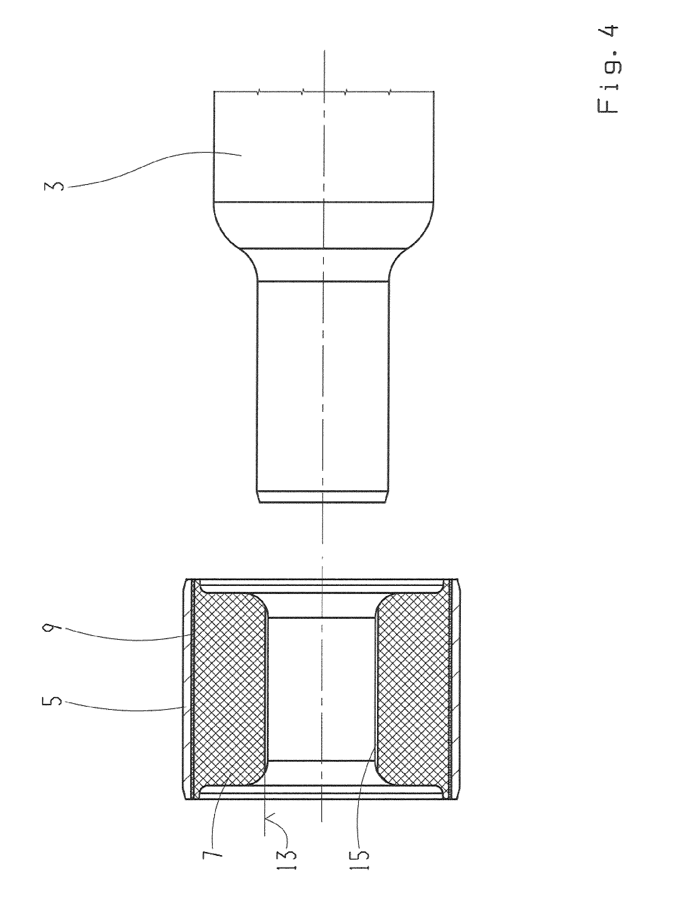

Bei der Anordnung gemäß Fig. 4 liegt der erste Fügepartner in Form eines Unterzusammenbaus gebildet aus dem hülsenförmigen Außenteil 5, dem daran unter Zwischenschaltung des Haftsystems 9 angespritzten Elastomerkörper 7 mit der auf dessen Innenumfangsfläche 13 aufgetragenen Bindemittelschicht 15 vor. Das Innenteil 3 wird in diesem Ausführungsbeispiel durch ein Lenkerbauteil, beispielsweise einen Dreipunktlenker, gebildet. Das Lenkerbauteil weist ein zapfenartiges Ende auf, das an seinem Stirnende zur Erleichterung des Einpressvorgangs angefast ist. Das vorliegend unbeschichtete zapfenartige Ende kann alternativ auch mit einer Pulverlackschicht 23 überzogen sein.

### Bezugszeichen

- 1: Elastomerlager
- 3: Innenteil
- 5: Außenteil
- 7: Elastomerkörper
- 9: Haftsystem
- 11: Außenumfangsfläche des Innenteils
- 13: Innenumfangsfläche des Elastomerkörpers
- 15: Bindemittelschicht
- 17: Außenumfangsfläche des Elastomerkörpers
- 19: Innenumfangsfläche des Außenteils
- 21: Zwischenblech
- 23: Lackschicht, Pulverlackschicht

- H: Gummihöhe im entspannten Zustand des Elastomerkörpers
- h: Gummihöhe im eingepressten Zustand des Elastomerkörpers

## Patentansprüche

1. Elastomerlager (1), insbesondere für ein Kraftfahrzeug, wobei das Elastomerlager (1) als Einpressverbund ausgeführt ist, aufweisend
- ein Innenteil (3),
- ein das Innenteil (3) mit einem Abstand umgreifendes Außenteil (5) und
- einen zwischen dem Innenteil (3) und dem Außenteil (5) angeordneten, im Wesentlichen säulenförmigen Elastomerkörper (7) mit einer Umfangsfläche (13, 17), welche eine Innenumfangsfläche (13) oder eine Außenumfangsfläche (17) desselben bildet, wobei
- zwischen dem Elastomerkörper (7) und dem Innenteil (3) oder zwischen dem Elastomerkörper (7) und dem Außenteil (5) eine Bindemittelschicht (15) angeordnet ist,
**dadurch gekennzeichnet, dass** die Umfangsfläche (13, 17) des Elastomerkörpers (7) Träger der Bindemittelschicht (15) ist und eine Fügefläche des Einpressverbundes mit dem Innenteil (3) oder mit dem Außenteil (5) bildet.

2. Elastomerlager (1) nach Anspruch 1, **dadurch gekennzeichnet, dass** die Bindemittelschicht (15) als Haftvermittlerschicht, insbesondere als Haftvermittlerschicht auf 1-Komponenten-Basis, ausgebildet ist.

3. Elastomerlager (1) nach Anspruch 1 oder 2, **dadurch gekennzeichnet, dass** der Elastomerkörper (7) mit dessen Innenumfangsfläche (13) mit dem Innenteil (3) oder mit dessen Außenumfangsfläche (17) mit dem Außenteil (5) verbunden ist und dadurch einen Unterzusammenbau bildet, wobei die Bindemittelschicht (15) von der jeweils freien Umfangsfläche (13, 17) des Elastomerkörpers (7) getragen wird.

4. Elastomerlager (1) nach Anspruch 3, **dadurch gekennzeichnet, dass** der Elastomerkörper (7) in dem Unterzusammenbau als Anspritzteil ausgebildet ist.

5. Elastomerlager (1) nach einem der vorhergehenden Ansprüche, **dadurch gekennzeichnet, dass** das jeweils andere von Innenteil (3) oder Außenteil (5) an der zu der Bindemittelschicht (15) weisenden Oberfläche eine Lackschicht (23) aufweist, welche an die Bindemittelschicht (15) angrenzt.

6. Elastomerlager (1) nach Anspruch 5, **dadurch gekennzeichnet, dass** die Lackschicht als eine Pulverlackschicht (23), insbesondere eine Pulverlackschicht (23) auf Epoxidharzbasis, ausgebildet ist.

7. Elastomerlager (1) nach einem der vorhergehenden Ansprüche, **dadurch gekennzeichnet, dass** das Innenteil (3) und/oder das Außenteil (3) hülsenförmig ausgebildet sind bzw. ist.

8. Elastomerlager (1) nach einem der vorhergehenden Ansprüche, **dadurch gekennzeichnet, dass** das Innenteil (3) aus einem zumindest an seiner Außenumfangsfläche (11) mit Pulverlack beschichteten Rohrabschnitt oder Strangpressprofilabschnitt gebildet ist.

9. Elastomerlager (1) nach einem der Ansprüche 1 bis 6, **dadurch gekennzeichnet, dass** das Außenteil (5) aus einem zumindest an seiner Innenumfangsfläche (19) mit Pulverlack beschichteten Rohrabschnitt oder Strangpressprofilabschnitt gebildet ist.

10. Elastomerlager (1) nach einem der vorhergehenden Ansprüche, **dadurch gekennzeichnet, dass** das Innenteil (3) und/oder das Außenteil (5) als ein von einer Hülsenform abweichendes Strukturbauteil ausgebildet sind bzw. ist.

11. Elastomerlager (1) nach einem der vorhergehenden Ansprüche, **dadurch gekennzeichnet, dass** der eingepresste Elastomerkörper (7) eine Vorspannung von größer 18%, vorzugsweise größer 20% und besonders vorzugsweise größer 25% aufweist, wobei die Vorspannung definiert ist als Quotient aus der Differenz einer Gummihöhe des Elastomerkörpers (7) im entspannten (H) und im eingepressten (h) Zustand und der Gummihöhe (H) des Elastomerkörpers im entspannten Zustand.

12. Verfahren zur Herstellung eines Elastomerlagers (1) nach einem der vorgenannten Ansprüche, aufweisend folgende Verfahrensschritte:
- Bereitstellen eines ersten Fügepartners in Form eines Unterzusammenbaus, aufweisend ein Innenteil (3) oder ein Außenteil (5) und einen mit einer Außenumfangsfläche (11) des Innenteils (3) oder mit einer Innenumfangsfläche (19) des Außenteils verbundenen Elastomerkörper (7), wobei auf der freien Umfangsfläche des Elastomerkörpers (7) eine Bindemittelschicht (15), insbesondere eine Haftvermittlerschicht, aufgebracht ist.
- Bereitstellen eines zweiten Fügepartners in Form des Innenteils (3) oder des Außenteils (5), welches nicht Bestandteil des Unterzusammenbaus ist.
- Erzeugen eines aus dem ersten Fügepartner und dem zweiten Fügepartner gebildeten Einpressverbundes, wobei durch eine Reduzierung der Gummihöhe (H) eine Vorspannung in den Elastomerkörper (7) eingebracht wird.

13. Verfahren zur Herstellung eines Elastomerlagers (1) nach Anspruch 11, **dadurch gekennzeichnet, dass** der Elastomerkörper (7) zur Erstellung des Unterzusammenbaus im Spritzgießverfahren an die Außenumfangsfläche (11) des Innenteils (3) oder an die Innenumfangsfläche (19) des Außenteils (5) angespritzt wird.

14. Verfahren zur Herstellung eines Elastomerlagers (1) nach Anspruch 11 oder 12, **dadurch gekennzeichnet, dass** auf der dem Elastomerkörper (7) zugewandten Oberfläche des zweiten Fügepartners unter Zuführung von Prozesswärme eine Pulverlackschicht (23) erzeugt wird.

15. Verfahren zur Herstellung eines Elastomerlagers (1) nach einem der Ansprüche 11 bis 13, **dadurch gekennzeichnet, dass** zumindest der Bereich der Bindemittelschicht (15) nach dem Erzeugen des Einpressverbundes einer Wärmebehandlung durch einen Wärmeeintrag unterzogen wird.

16. Verfahren zur Herstellung eines Elastomerlagers (1) nach Anspruch 14, **dadurch gekennzeichnet, dass** der Wärmeeintrag über den an die Bindemittelschicht (15) angrenzenden zweiten Fügepartner erfolgt.

17. Verfahren zur Herstellung eines Elastomerlagers (1) nach Anspruch 15, **dadurch gekennzeichnet, dass** der Wärmeeintrag über eine Erwärmung des zweiten Fügepartners vor dem Erzeugen des Einpressverbundes oder unter Ausnutzung der dem zweiten Fügepartner während der Erzeugung der Pulverlackschicht (23) zugeführten Prozesswärme erfolgt.
